# EUROPÄISCHE PATENTSCHRIFT

(11) **EP 1 387 869 B1**
(45) Veröffentlichungstag und Bekanntmachung des Hinweises auf die Patenterteilung: **19.04.2006**
(21) Anmeldenummer: 02735318.4
(22) Anmeldetag: 27.04.2002
(51) Int. Cl.: C09B 67/06, C09B 67/20

(54) **VERFAHREN ZUR HERSTELLUNG VON PIGMENTGRANULATEN**
METHOD FOR THE PRODUCTION OF PIGMENT GRANULES
PROCEDE DE PRODUCTION DE GRANULES PIGMENTAIRES

(30) Priorität: 10.05.2001 DE 10122616
(43) Veröffentlichungstag der Anmeldung: 11.02.2004
(73) Patentinhaber: Clariant Produkte (Deutschland) GmbH, 65929 Frankfurt am Main (DE)
(72) Erfinder: METZ, Hans, Joachim, 64285 Darmstadt (DE); STOHR, Andreas, 67251 Freinsheim (DE); OHLEIER, Heinfred, 65451 Kelsterbach (DE)
(86) Internationale Anmeldenummer: PCT/EP2002/004697
(87) Internationale Veröffentlichungsnummer: WO 2002/090446

(56) Entgegenhaltungen:
- EP-A- 0 424 896
- EP-A- 1 081 195
- FR-A- 1 475 647
- GB-A- 915 453
- NL-A- 8 402 535
- US-A- 4 302 254
- US-A- 4 919 922
- US-A- 5 298 355
- DATABASE WPI Section Ch, Week 199402 Derwent Publications Ltd., London, GB; Class A97, AN 1994-012522 XP002215705 & JP 05 320532 A (TOYO INK MFG CO), 3. Dezember 1993 (1993-12-03)

## Beschreibung

Die Erfindung betrifft ein Verfahren zur Herstellung einer organischen Farbmittelzusammensetzung in Granulatform, bestehend aus mit Wachs belegten organischen Pigmenten.

Organische Pigmente fallen bei der Herstellung üblicherweise in Form von Pulvern an. Die Pulver bestehen aus sehr kleinen Teilchen, deren Dimensionen im Bereich von submikroskopisch bis etwa 100 µm liegen können. Für den praktischen Einsatz haben sich organische Pigmente mit ungefähren Korngrößen von 0,01 bis 0,1 µm für transparente Formen und von 0,1 bis 10 µm für deckende Formen bewährt. Durch ihre geringe Partikelgröße haben pulverförmige Pigmente jedoch den Nachteil, dass sie stauben. Staubentwicklung ist ein kritischer Faktor bei der Produktion und der Weiterverarbeitung von Pigmentpulvern. Sie führt zur Kontamination von Geräten, Anlagen und Produkten, so dass bei Produktumstellungen oft Reinigungsarbeiten mit hohem finanziellen und zeitlichen Aufwand durchgeführt werden müssen. Außerdem werden die gesetzlichen Auflagen und Bestimmungen zur Arbeitsplatzhygiene und zum Umweltschutz zunehmend verschärft. Dadurch ergeben sich Forderungen seitens der Pigmentverarbeiter zur Bereitstellung nicht staubender Pigmentformen.
Es sind schon zahlreiche Methoden versucht worden, um die Pigmente in eine staubarme Form zu überführen. Es hat sich jedoch herausgestellt, dass Verbesserungen des Staubverhaltens meist nur auf Kosten anderer physikalischer Eigenschaften der Pigmentpartikel, insbesondere auf Kosten der Dispergierbarkeit, erzielt werden. In DE 199 41 061 A1 wurde dieses Problem dadurch gelöst, dass wachsartige Hilfssubstanzen zur Granulierung bei einem Pigmentfinish in einem organischen Lösemittel zugegeben werden. Das genannte Verfahren besitzt jedoch den Nachteil, dass mit erhöhten Temperaturen, Überdruck und mit organischen Lösemitteln gearbeitet wird und daher nur für solche Pigmente zweckmäßig ist, für die ein Lösemittelfinish zur Einstellung der gewünschten physikalischen Eigenschaften unbedingt notwendig ist. Neben diesen "Lösemittelfinish-Pigmenten" gibt es auch organische Pigmente, die nur in Wasser, d.h. ohne organisches Lösemittel, gefinisht werden, oder bei denen auf einen Finish komplett verzichtet werden kann.

Der Einsatz wäßriger Polyethylenemulsionen zur Herstellung leicht dispergierbarer Pigmentpulverpräparationen wird in der Druckschrift GB,A,915,453 beschrieben.

Aufgabe der vorliegenden Erfindung ist es, ein Verfahren zur Verfügung zu stellen, das ohne organische Lösemittel, ohne Überdruck und mit niedrigen Temperaturen auskommt und organische Pigmente in Granulatform liefert, das staubfrei handhabbar und im Anwendungsmedium gut dispergierbar ist.

Es wurde gefunden, dass diese Aufgabe überraschenderweise dadurch gelöst werden kann, dass das Pigment vor einer Sprühgranulierung mit einem Wachs oder wachsartigen Polymer in Kontakt gebracht wird, indem eine wässrige Wachs- oder Polymeremulsion und eine wässrige Pigmentsuspension miteinander vermischt werden, anschließend die Wachs- oder Polymeremulsion zur Koagulation gebracht wird und dabei das Wachs oder Polymer auf dem Pigment abgeschieden oder zumindest mit dem Pigment in Kontakt gebracht wird.

Gegenstand der vorliegenden Erfindung ist ein Verfahren zur Herstellung eines leicht dispergierbaren Pigmentgranulats, dadurch gekennzeichnet, dass man eine wässrige Suspension eines organischen Pigments mit einer wässrigen Emulsion eines wachsartigen Additivs vermischt, anschließend die wässrige Emulsion zur Koagulation bringt, und die so erhaltene wässrige Dispersion sprühtrocknet.

Während der Koagulation der wässrigen Emulsion wird das wachsartige Additiv mit dem Pigment in Kontakt gebracht und vollständig oder teilweise auf den Pigmentpartikeln abgeschieden. Durch die Sprühtrocknung wird zum einen eine Granulierung in eine geeignete Partikelgröße erreicht, ohne dass der erzielte Kontakt des Pigments mit dem wachsartigen Additiv beeinträchtigt wird. Zum anderen wird die sonst bei der Herstellung von Pigmentpulvern notwendige Mahlung vermieden.
Die so hergestellten Pigmentgranulate weisen eine Teilchengrößenverteilung bevorzugt im Bereich von 0,05 bis 5 mm auf. Besonders bevorzugt sind Granulate mit Teilchendurchmessern im Bereich von 0,1 bis 2 mm. Durch ihre kugelförmige Gestalt sind die Granulate rieselfähig und damit gut dosierbar. Aufgrund ihrer Größe und Gewichtes sind die Granulate außerdem staubarm.

Als organische Pigmente kommen z.B. Azopigmente, wie Monoazo-, Disazo-, Naphtol-, Metallkomplexpigmente, wie auch polyzyklische Pigmente, wie Isoindolinon- und Isoindolinpigmente, Anthanthron-, Thioindigo-, Chinophthalon-, Anthrachinon-, Dioxazin-, Phthalocyanin-, Chinacridon-, Perylen-, Perinon-, Diketopyrrolopyrrol- und Azomethinpigmente, in Betracht.

Besonders vorteilhaft ist das erfindungsgemäße Verfahren für verlackte Azopigmente, wie z.B. verlackte β-Naphthol-Pigmente, verlackte BONS-Pigmente (BONS = Betaoxynaphthoesäure), verlackte Naphthol AS-Pigmente und verlackte Naphthalinsulfonsäure-Pigmente.
Beispiele für verlackte β-Naphthol-Pigmente sind C.I. Pigment Red 49, P.R. 50, P.R. 51, P.R. 53, P.R. 68, P.O. 17, P.O. 46.
Beispiele für verlackte BONS-Pigmente sind P.R. 48, P.R. 52, P.R. 57, P.R. 58, P.R. 63, P.R. 64, P.R. 200, P. Brown 5.
Beispiele für verlackte Naphthol AS-Pigmente sind P.R. 151, 237, 239, 240, 243, 247.
Beispiele für verlackte Naphthalinsulfonsäure-Pigmente sind P. Yellow 104, P.O. 19, P.R. 60, 66, 67.

Unter wachsartigen Additiven werden üblicherweise Wachse als solche sowie thermoplastische Polymere mit wachsartigem Charakter verstanden.

Wachse bilden eine Gruppe von natürlichen oder synthetischen Stoffen mit gleichen oder ähnlichen Gebrauchseigenschaften, gekennzeichnet durch folgende physikalische Eigenschaften:
Bei 20°C knetbar, fest bis brüchig hart, grob bis fein kristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar (Römpps Chemie-Lexikon, Band 6, 8. Auflage 1988, S. 463, Franck'sche Veriagshandlung).

Als Wachse werden bevorzugt: Naturwachse, wie Pflanzenwachse, z.B. Carnaubawachs, Candellilawachs, tierische Wachse, z.B. Bienenwachs, modifizierte Naturwachse, wie z.B. Paraffinwachse, Mikrowachse, teilsynthetische Wachse, wie z.B. Montanesterwachse oder vollsynthetische Wachse, wie Polyolefinwachse, z.B. Polyethylen- und Polypropylenwachse, die nach klassischen Verfahren, wie die Hochdruckpolymerisation und Ziegler-Natta-Polymerisation oder auch über neuere Verfahren, wie die Metallocenpolymerisation, hergestellt werden können; Polyethylenglykolwachse; Cycloolefincopolymerwachse, Amidwachse, wie z.B. N,N'-Distearoylethylendiamin, sowie chlor- oder fluorhaltige Polyolefinwachse oder Polyethylen-Polytetrafluorethylen-Wachsmischungen.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureanhydrid- oder Hydroxygruppen enthaltenden Monomer.

Als thermoplastische Polymere sind höhermolekulare Verbindungen, die einen wachsartigen Charakter aufweisen, und vorzugsweise durch Polymerisations-, Polykondensations- oder Polyadditionsverfahren hergestellt wurden, geeignet, z.B. thermoplastische Polyester-, Epoxid-, Styrol-Acrylat-Copolymer-, Styrol-Butadien-Copolymer-, Cycloolefincopolymer-Harze, wie z.B. ® Topas.

Das Zahlenmittel des Molekulargewichts (M̅ₙ) der wachsartigen Additive soll Werte kleiner 20 000 g/mol aufweisen, vorzugsweise kleiner 5000 g/mol, besonders bevorzugt mit einem Zahlenmittel des Molekulargewichts (M̅_{*n*}) kleiner 3000 g/mol. Der Tropfpunkt der wachsartigen Additive liegt vorzugsweise im Bereich von 60 bis 180°C, besonders bevorzugt im Bereich von 80 bis 140°C.

Je nach Anwendungsgebiet des Pigmentgranulates kann die Menge und die Art des wachsartigen Additivs variieren, vor allem um die Verträglichkeit mit dem Anwendungsmedium zu gewährleisten. Um ein definiertes Eigenschaftsprofil zu erzeugen, ist es auch möglich, eine Emulsion bestehend aus einer Mischung aus mindestens zwei verschiedenen wachsartigen Additiven zu verwenden oder mindestens zwei Emulsionen aus verschiedenen wachsartigen Additiven zu verwenden.

Unter dem Begriff "wässrige Emulsion eines wachsartigen Additivs" werden Dispersionen von fein verteilten natürlichen und/oder synthetischen Wachsen oder wachsartigen Polymeren (Teilchengröße 0,05 bis 5 µm) in wässrigen Dispersionsmitteln verstanden. Eingeschlossen sind damit Dispersionen von Polymeren, wie Natur- (Kautschuklatex) und Synthesekautschuk (Syntheselatex), von Kunstharzen (Kunstharzdispersionen) und Kunststoffen (Kunststoffdispersionen), wie Polymerisaten, Polykondensaten und Polyadditionsverbindungen.
Derartige Dispersionen sind bekannt und oftmals auch im Handel erhältlich.

Üblicherweise sind neben dem wachsartigen Additiv noch Emulgatoren enthalten. Als Emulgatoren im Sinne der vorliegenden Erfindung können anionische, kationische oder nichtionische Emulgatoren verwendet werden.
Als anionische Emulgatoren kommen beispielsweise Salze gesättigter oder ungesättigter Fettsäuren, beispielsweise Stearinsäure, Ölsäure oder Linolsäure in Frage. Letztere werden zur Salzbildung mit geeigneten Basen wie z.B. Alkalihydroxiden, Ammoniak oder Aminen neutralisiert. Es eignen sich beispielsweise unsubstituierte oder substituierte, z.B. Hydroxylgruppen enthaltende, aliphatische Amine. Als Beispiele seien genannt Tri-i-propylamin, Diethanolamin, Triethanolamin sowie Dimethyl- oder Diethylaminoethanol. Beispiele für kationische Emulgatoren sind Salze von gegebenenfalls alkoxylierten Fettaminen.
Als Beispiele für nichtionische Emulgatoren seien alkoxylierte Fettsäuren, -alkohole oder -amine sowie Glycerin- oder Sorbitester genannt.
Es können auch Mischungen der vorgenannten Emulgatoren verwendet werden.

Die wässrige Emulsion des wachsartigen Additivs enthält das wachsartige Additiv zweckmäßigerweise in einer Konzentration von 5 bis 40 Gew.-%, vorzugsweise 10 bis 30 Gew.-%, und den Emulgator in einer Konzentration von 0 bis 40 Gew.-%, vorzugsweise 1 bis 20 Gew.-%.

Das Abscheiden des wachsartigen Additivs auf dem Pigment, beziehungsweise zumindest das in Kontakt bringen des wachsartigen Additivs mit dem Pigment geschieht wie folgt beschrieben:
Eine wässrige Pigmentsuspension wird mit einer wässrigen Emulsion des wachsartigen Additivs verrührt, zweckmäßigerweise bei Temperaturen zwischen 20 und 95°C, vorzugsweise zwischen 40 und 85 °C. Die wässrige Pigmentsuspension enthält zweckmäßigerweise 3 bis 20 Gew.-%, vorzugsweise 5 bis 15 Gew.-%, Pigment, bezogen auf das Gesamtgewicht der Pigmentsuspension.
Die Pigmentsuspension kann direkt bei der Pigmentsynthese oder nach einem Finishprozess anfallen, oder dadurch, dass ein Pigmentpulver in Wasser angerührt wird.
Vorzugsweise werden 50 bis 98 Gewichtsteile, vorzugsweise 60 bis 90 Gewichtsteile, an wässriger Pigmentsuspension mit 50 bis 2 Gewichtsteilen, vorzugsweise 10 bis 40 Gewichtsteilen, wässriger Emulsion des wachsartigen Additivs vermischt.
Nach Durchmischung wird die wässrige Emulsion zur Koagulation gebracht, wobei sich das wachsartige Additiv vollständig oder teilweise auf dem Pigment abscheidet. Die Koagulation kann durch Änderung des pH-Wertes, Zugabe von Salzen, insbesondere anorganischen Salzen, und/oder durch Zugabe von bekannten Koagulationshilfsmitteln, herbeigeführt werden. So kann eine anionisch, z.B. mit einem Fettsäuresalz, stabilisierte alkalische Emulsion durch Ansäuern gebrochen werden, vorzugsweise bei pH 6,5 bis 1. Eine kationisch, z.B. mit einem Fettamin, stabilisierte saure Emulsion kann durch Zugabe von Lauge gebrochen werden, vorzugsweise bei pH 7,8 bis 12.
Danach liegt eine wässrige Pigmentdispersion vor, in der das wachsartige Additiv auf dem Pigment teilweise oder vollständig abgeschieden ist oder zumindest mit dem Pigment in Kontakt steht.

Die wässrige Dispersion wird gegebenenfalls mit Wasser auf die gewünschte Konzentration, zweckmäßigerweise auf eine 5 bis 40 gew.-%ige Suspension des mit dem wachsartigen Additiv belegten oder in Kontakt stehenden Pigments, eingestellt, gegebenenfalls mit Hilfe eines Aggregates, z.B. einer Kolloidmühle, homogenisiert und anschließend zum Granulat sprühgetrocknet.
Aus anwendungstechnischer Sicht kann es in manchen Fällen zweckmäßig sein, das mit Wachs belegte Pigment vor der Granulierung durch Sprühtrocknung nochmals abzufiltrieren und zu waschen.

Zur Sprühtrocknung sind Sprühtürme mit Einstoffdüse oder Sprühtürme, die eine Aufbaugranulierung durchführen (z.B. Fluidized bed Spray Drier), geeignet.
Bei Sprühtürmen mit Einstoffdüse wird die Suspension in Form größerer Tropfen versprüht und das Wasser verdampft. Liegen die Temperaturen im Sprühturm um den oder oberhalb des Tropfpunktes des wachsartigen Additivs, schmilzt das Additiv auf, und es entsteht ein kugelförmiges Granulat mit glatter Oberfläche.

Bei FSD-Sprühtürmen wird die Suspension zu einem feinen Pulver versprüht. Die kräftige Fluidisierung im Fließbett und die Rezirkulation der durch die Abluft mitgerissenen Feinpulverpartikel, die in einem Vorzyklon abgeschieden werden, bewirken, dass die Sprühtrocknung in einer turbulenten Pulverwolke stattfindet. Hierdurch entsteht ein Puderungseffekt und bei Temperaturen im Turm um den oder oberhalb des Tropfpunktes des wachsartigen Additivs verkleben die Partikel zu einem himbeerartigen Granulat. Die Restfeuchte und die Granulometrie werden im Fließbett kontrolliert.
Die Gaseintrittstemperatur im Sprühturm liegt normalerweise im Bereich von 180 bis 250°C, bevorzugt 190 bis 230°C, die Gasaustrittstemperatur im Bereich von 70 bis 150°C, bevorzugt 90 bis 130°C.

Das sprühgetrocknete Granulat enthält das organische Pigment vorzugsweise in einer Menge von 50 bis 99 Gew.-%, insbesondere von 60 bis 95 Gew.-%, und das wachsartige Additiv in einer Menge von 1 bis 50 Gew.-%, insbesondere 5 bis 40 Gew.-%, bezogen auf das Gesamtgewicht des Pigmentgranulats.

Die Granulate können zum Einfärben von hochmolekularen organischen Materialien eingesetzt werden. Diese können natürlicher oder synthetischer Herkunft sein. Es kann sich z.B. um Naturharze, trocknende Öle oder Kautschuk handeln. Es kann sich aber auch um abgewandelte Naturstoffe handeln, wie z.B. Chlorkautschuk, Cellulosederivate, wie Celluloseester oder Celluloseether, und besonders um vollsynthetische organische Polymere (Kunststoffe), die durch Polymerisation, Polykondensation oder Polyaddition hergestellt sind. Aus der Klasse der durch Polymerisation hergestellten Kunststoffe seien besonders folgende genannt: Polyolefine, wie z.B. Polyethylen, Polypropylen, Polyisobutylen, und substituierte Polyolefine, wie z.B. Polystyrol, Polyvinylchlorid, Polyvinylidenchlorid, Polyvinylacetale, Polyacrylnitril, Polyacrylsäure, Polymethacrylsäure, Polyacrylsäure- und Polymethacrylsäureester oder Polybutadien, sowie Copolymerisate davon.
Aus der Klasse der durch Polyaddition und Polykondensation hergestellten Kunststoffe seien genannt: Polyester, Polyamide, Polyimide, Polycarbonate, Polyurethane, Polyether, Polyacetale, sowie die Kondensationsprodukte von Formaldehyd mit Phenolen (Phenoplast) und die Kondensationsprodukte von Formaldehyd mit Harnstoff, Thiohamstoff und Melamin (Aminoplaste).

Das genannte hochmolekulare organische Material kann einzeln oder in Mischungen in Form von Kunststoffmassen oder -schmelzen vorliegen. Es kann auch in Form seiner Monomere vorliegen, die nach dem Färben polymerisiert werden.
Die erfindungsgemäßen Pigmentgranulate können in jedem Mengenverhältnis, das zum Einfärben des hochmolekularen organischen Materials notwendig ist, eingesetzt werden. Das pigmentierte hochmolekulare organische Material enthält üblicherweise 0,1 bis 30 Gew.-%, bevorzugt 1 bis 20 Gew.-%, der erfindungsgemäßen Granulate, bezogen auf das zu pigmentierende hochmolekulare organische Material.

Zum Einfärben des hochmolekularen organischen Materials können die erfindungsgemäßen Granulate für sich alleine eingesetzt werden. Zur Einstellung verschiedener Farbtöne oder Farbeffekte, ist es auch möglich, andere Farbmittel, wie z.B. weiße, farbige oder schwarze Pigmente, sowie Effektpigmente, zusätzlich neben den erfindungsgemäßen Granulaten dem hochmolekularen organischem Material zuzusetzen.

Die Granulate stellen hochkonzentrierte Farbmittel dar, in denen die Pigmente in einer vordispergierten Form, ähnlich einem Masterbatch, vorliegen. Zum Einfärben des hochmolekularen organischen Materials muss daher keine große Dispergierarbeit mehr geleistet werden und es genügt z.B. ein Durchmischen der erfindungsgemäßen Granulate mit dem hochmolekularen organischen Material in Rollmühlen, Mixern, anderen Mahlaggregaten oder im Einschneckenextruder.

Durch die leichte Einarbeitung in Kunststoffe, können die erfindungsgemäß hergestellten Granulate auch zur Herstellung von eingefärbten Tonern für Laserdrucker und Kopierer und zur Herstellung von Pulverlacken verwendet werden, deren Matrixmaterialien ebenfalls hochmolekulare organische Materialien darstellen. Weiterhin sind die besagten Granulate zur Herstellung von Druckfarben, Tinten und Farbfiltern geeignet.

### Beispiel 1

25,5 kg wasserfeuchter Presskuchen von ungefinishtem Rohpigment P.Y. 191 (entspricht 7,5 kg Trockenpigment) werden in 124,5 kg Wasser mit Hilfe eines Faßrührers dispergiert. Nach Aufheizen auf 80°C werden 18,75 kg einer wässrigen Emulsion, bestehend aus 16,87 kg Wasser, 1,67 kg oxidiertem Polyolefinwachs ® Licowax PED 121, emulgiert mit 0,21 kg Kaliumoleat, zugetropft. Nach einer Rührzeit von 15 Minuten wird der pH Wert durch Zugabe von Salzsäure auf pH 5 gestellt. Nach einer Rührzeit von 15 Minuten wird die Suspension heiß abfiltriert und mit Wasser salzfrei gewaschen.
Der Presskuchen wird anschließend mit Wasser auf eine Feststoffkonzentration von 10 Gew.-% gestellt, dispergiert und durch Passieren durch eine Kolloidmühle homogenisiert. Anschließend wird die homogene Suspension in einem FSD-Sprühturm versprüht und granuliert (Gaseintrittstemperatur: 190°C; Gasaustrittstemperatur: 100°C; Betttemperatur: 75°C).
Man erhält ein Pigmentgranulat mit himbeerartiger Struktur.

Das erhaltene Granulat ist praktisch staubfrei und gut rieselfähig.
Die Coloristik wurde in Polyethylen geprüft und entspricht dem Pulvertyp.

### Beispiel 2

Durchführung wie Beispiel 1, mit dem Unterschied, dass die wässrige Emulsion aus 5,06 kg Wasser, einer Mischung aus 0,86 kg Licowax PE520 und 0,86 kg Licowax PED121, emulgiert mit 0,56 kg Alkylammonium-oleat, besteht.
Das erhaltene Granulat ist praktisch staubfrei und gut rieselfähig.
Die Coloristik wurde in Polyethylen geprüft und entspricht dem Pulvertyp.

### Beispiel 3: Pigment Red 247

25,5 kg wasserfeuchter Presskuchen von Pigment Red 247 (entspricht 7,5 kg Trockenpigment) werden in 79,5 kg Wasser mit Hilfe eines Faßrührers dispergiert. Nach Aufheizen auf 80°C wird der pH-Wert durch Zugabe von Salzsäure auf pH 3,6 gestellt. Anschließend werden 18,75 kg einer wässrigen Emulsion, bestehend aus 16,87 kg Wasser, 1,67 kg oxidiertem Polyolefinwachs ® Licowax PED 121, emulgiert mit 0,21 kg Kaliumoleat, zugetropft. Der pH-Wert nach Zugabe der Wachsemulsion beträgt 4,2. Nach einer Rührzeit von 15 Minuten wird die Suspension heiß abfiltriert und mit Wasser salzfrei gewaschen.

Der Presskuchen wird anschließend mit Wasser auf eine Feststoffkonzentration von 10 Gew.-% gestellt, dispergiert und durch Passieren durch eine Kolloidmühle homogenisiert. Anschließend wird die homogene Suspension in einem Sprühturm mit Einstoffdüse versprüht (Gaseintrittstemperatur: 190°C; Gasaustrittstemperatur: 100°C; Betttemperatur: 75°C).
Man erhält ein kugelförmiges Pigmentgranulat.
Das erhaltene Granulat ist praktisch staubfrei und gut rieselfähig.
Die Coloristik wurde in Polyethylen geprüft und entspricht dem Pulvertyp.

### Beispiel 4: Pigment Red 170

52,26 kg wasserfeuchter Presskuchen von gefinishtem Pigment Red 170 (entspricht 9,1 kg Trockenpigment) werden in 77,74 kg Wasser mit Hilfe eines Faßrührers dispergiert. Bei 80°C wird der pH-Wert mit Essigsäure auf 3,8 gestellt und 7,34 kg einer wässrigen Emulsion, bestehend aus 5,06 kg Wasser, einer Mischung aus 0,86 kg Licowax PE520 und 0,86 kg Licowax PED121, emulgiert mit 0,56 kg Alkylammonium-oleat, zugetropft. Der pH-Wert nach der Zugabe der Wachsemulsion beträgt 5. Nach einer Rührzeit von 15 Minuten wird die Suspension heiß abfiltriert und mit Wasser salzfrei gewaschen.

Der Presskuchen wird anschließend mit Wasser auf eine Feststoffkonzentration von 10 Gew.-% gestellt, dispergiert und durch Passieren durch eine Kolloidmühle homogenisiert. Anschließend wird die homogene Suspension in einem Sprühturm mit Einstoffdüse versprüht (Gaseintrittstemperatur: 190°C; Gasaustrittstemperatur: 100°C; Betttemperatur: 75°C). Man erhält ein kugelförmiges Pigmentgranulat.
Das erhaltene Granulat ist praktisch staubfrei und gut rieselfähig.
Die Coloristik wurde in Polyethylen geprüft und entspricht dem Pulvertyp.

## Patentansprüche

1. Verfahren zur Herstellung eines leicht dispergierbaren Pigmentgranulats, **dadurch gekennzeichnet, dass** man eine wässrige Suspension eines organischen Pigments mit einer wässrigen Emulsion eines wachsartigen Additivs vermischt, anschließend die wässrige Emulsion zur Koagulation bringt, und die so erhaltene wässrige Dispersion sprühtrocknet.

2. Verfahren nach Anspruch 1, **dadurch gekennzeichnet, dass** das organische Pigment ein Azopigment aus der Gruppe der Monoazo-, Disazo-, Naphtol-, Metallkomplexpigmente, oder ein polyzyklisches Pigment aus der Gruppe der Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Diketopyrrolopyrrol- und Azomethinpigmente ist.

3. Verfahren nach Anspruch 1 oder 2, **dadurch gekennzeichnet, dass** das organische Pigment ein verlacktes Azopigment ist.

4. Verfahren nach einem oder mehreren der Ansprüche 1 bis 3, **dadurch gekennzeichnet, dass** das wachsartige Additiv ein Wachs oder ein thermoplastisches Polymer mit wachsartigem Charakter ist.

5. Verfahren nach einem oder mehreren der Ansprüche 1 bis 4, **dadurch gekennzeichnet, dass** das wachsartige Additiv ein Naturwachs, ein teilsynthetisches Wachs oder ein vollsynthetisches Wachs ist.

6. Verfahren nach einem oder mehreren der Ansprüche 1 bis 5, **dadurch gekennzeichnet, dass** das wachsartige Additiv ein Polyolefinwachs ist.

7. Verfahren nach einem oder mehreren der Ansprüche 1 bis 6, **dadurch gekennzeichnet, dass** die wässrige Suspension des organischen Pigments das organische Pigment in einer Menge von 3 bis 20 Gew.-% enthält.

8. Verfahren nach einem oder mehreren der Ansprüche 1 bis 7, **dadurch gekennzeichnet, dass** die wässrige Emulsion des wachsartigen Additivs das wachsartige Additiv in einer Menge von 5 bis 40 Gew.-% und einen Emulgator in einer Menge von 0 bis 40 Gew.-%, jeweils bezogen auf das Gewicht der wässrigen Emulsion, enthält.

9. Verfahren nach einem oder mehreren der Ansprüche 1 bis 8, **dadurch gekennzeichnet, dass** 50 bis 98 Gewichtsteile an wässriger Pigmentsuspension mit 50 bis 2 Gewichtsteilen an wässriger Emulsion des wachsartigen Additivs vermischt werden.

10. Verfahren nach einem oder mehreren der Ansprüche 1 bis 9, **dadurch gekennzeichnet, dass** die wässrige Pigmentsuspension mit der wässrigen Emulsion des wachsartigen Additivs bei einer Temperatur zwischen 20 und 95°C vermischt wird.

11. Verfahren nach einem oder mehreren der Ansprüche 1 bis 10, **dadurch gekennzeichnet, dass** die Koagulation durch Änderung des pH-Wertes, Zugabe von Salzen und/oder durch Zugabe eines Koagulationshilfsmittels herbeigeführt wird.

## Claims

1. A process for producing a readily dispersible granular pigment, **characterized in that** it comprises an aqueous suspension of an organic pigment being mixed with an aqueous emulsion of a waxy additive, then the aqueous emulsion being made to coagulate and the aqueous dispersion thus obtained being spray dried.

2. A process as claimed in claim 1, **characterized in that** the organic pigment is an azo pigment selected from the group consisting of monoazo pigments, disazo pigments, Naphtol pigments and metal complex pigments, or is a polycyclic pigment selected from the group consisting of isoindolinone pigments, isoindoline pigments, anthanthrone pigments, thioindigo pigments, quinophthalone pigments, anthraquinone pigments, dioxazine pigments, phthalocyanine pigments, quinacridone pigments, perylene pigments, perinone pigments, diketopyrrolopyrrole pigments and azomethine pigments.

3. A process as claimed in claim 1 or 2, **characterized in that** the organic pigment is a laked azo pigment.

4. A process as claimed in one or more of claims 1 to 3, **characterized in that** the waxy additive is a wax or a thermoplastic polymer of waxy character.

5. A process as claimed in one or more of claims 1 to 4, **characterized in that** the waxy additive is a natural wax, a partly synthetic wax or a wholly synthetic wax.

6. A process as claimed in one or more of claims 1 to 5, **characterized in that** the waxy additive is a polyolefin wax.

7. A process as claimed in one or more of claims 1 to 6, **characterized in that** the aqueous suspension of the organic pigment contains the organic pigment in an amount from 3 to 20% by weight.

8. A process as claimed in one or more of claims 1 to 7, **characterized in that** the aqueous emulsion of the waxy additive contains the waxy additive in an amount of 5 to 40% by weight and an emulsifier in an amount from 0 to 40% by weight, each percentage being based on the weight of the aqueous emulsion.

9. A process as claimed in one of more of claims 1 to 8, **characterized in that** 50 to 98 parts by weight of aqueous pigment suspension are mixed with 50 to 2 parts by weight of aqueous emulsion of the waxy additive.

10. A process as claimed in one or more of claims 1 to 9, **characterized in that** the aqueous pigment suspension is mixed with the aqueous emulsion of the waxy additive at a temperature of between 20 and 95°C.

11. A process as claimed in one or more of claims 1 to 10, **characterized in that** the coagulation is brought about by changing the pH, adding salts and/or by adding a coagulation assistant.

## Revendications

1. Procédé de production d'un granulé pigmentaire facilement dispersible, **caractérisé en ce que** l'on mélange une suspension aqueuse d'un pigment organique avec une émulsion aqueuse d'un additif cireux, on amène ensuite l'émulsion aqueuse à coagulation, et on sèche par pulvérisation la dispersion aqueuse ainsi obtenue.

2. Procédé selon la revendication 1, **caractérisé en ce que** le pigment organique est un pigment azoïque du groupe des pigments monoazoïques, disazoïques, naphtol, complexes métalliques, ou un pigment polycyclique du groupe des pigments isoindolinone, isoindoline, anthanthrone, thioindigo, quinophtalone, anthraquinone, dioxazine, phtalocyanine, quinacridone, pérylène, périnone, dicétopyrrolopyrrole et azométhine.

3. Procédé selon la revendication 1 ou 2, **caractérisé en ce que** le pigment organique est un pigment azoïque laqué.

4. Procédé selon une ou plusieurs des revendications 1 à 3, **caractérisé en ce que** l'additif cireux est une cire ou un polymère thermoplastique avec un caractère cireux.

5. Procédé selon une ou plusieurs des revendications 1 à 4, **caractérisé en ce que** l'additif cireux est une cire naturelle, une cire partiellement synthétique ou une cire complètement synthétique.

6. Procédé selon une ou plusieurs des revendications 1 à 5, **caractérisé en ce que** l'additif cireux est une cire de polyoléfine.

7. Procédé selon une ou plusieurs des revendications 1 à 6, **caractérisé en ce que** la suspension aqueuse du pigment organique contient le pigment organique en une quantité de 3 à 20 % en poids.

8. Procédé selon une ou plusieurs des revendications 1 à 7, **caractérisé en ce que** l'émulsion aqueuse de l'additif cireux contient l'additif cireux en une quantité de 5 à 40 % en poids et un émulsifiant en une quantité de 0 à 40 % en poids, respectivement par rapport au poids de l'émulsion aqueuse.

9. Procédé selon une ou plusieurs des revendications 1 à 8, **caractérisé en ce que** l'on mélange 50 à 98 parties en poids de la suspension aqueuse de pigment avec 50 à 2 parties en poids d'émulsion aqueuse de l'additif cireux.

10. Procédé selon une ou plusieurs des revendications 1 à 9, **caractérisé en ce que** l'on mélange la suspension aqueuse de pigment avec l'émulsion aqueuse de l'additif cireux à une température entre 20 et 95 °C.

11. Procédé selon une ou plusieurs des revendications 1 à 10, **caractérisé en ce que** l'on effectue la coagulation par changement de la valeur de pH, ajout de sels et/ou par ajout d'un adjuvant de coagulation.
